# EUROPÄISCHE PATENTSCHRIFT

(11) **EP 1 045 098 B1**
(45) Veröffentlichungstag und Bekanntmachung des Hinweises auf die Patenterteilung: **01.09.2004**
(21) Anmeldenummer: 00107553.0
(22) Anmeldetag: 07.04.2000
(51) Int. Cl.: E05C 9/18, E05C 9/22, E05C 9/00

(54) **Stangenverschluss mit Rundstange**
Espagnolette with circular lock-bar
Crémone à tige ronde

(30) Priorität: 16.04.1999 DE 29906755 U; 16.04.1999 DE 29906756 U
(43) Veröffentlichungstag der Anmeldung: 18.10.2000
(73) Patentinhaber: EMKA BESCHLAGTEILE GmbH & Co. KG, D-42551 Velbert (DE)
(72) Erfinder: Sauerland, Manfred, 45144 Essen (DE); Hoffmann, Rainer, 40764 Langenfeld (DE)
(74) Vertreter: Müller, Karl-Ernst, Dr., Dipl.-Ing.

(56) Entgegenhaltungen:
- EP-A- 0 054 225
- EP-A- 0 261 268
- WO-A-93/20315
- DE-U- 29 713 432

## Beschreibung

Die Erfindung betrifft einen Stangenverschluß zum Verriegeln von vorzugsweise Schaltschranktüren oder ähnlichen Türen oder Klappen mit einer auf der Außenseite des Türblattes oder der Klappe befestigbaren Grundplatte oder Schlüsselschild und mit einer Betätigung zum Antrieb der wenigstens einen im montierten Zustand längsverschieblich an dem Türblatt oder Klappe in wenigstens einer Stangenführung geführten, einen runden Querschnitt aufweisenden Verriegelungsstange.

Ein Stangenverschluß mit den vorgenannten Merkmalen ist in der EP 0 054 225 A1 beschrieben, bei welchem Verriegelungsstangen mit einem runden Querschnitt zum Einsatz kommen, wobei zur Verriegelung der Tür mit dem Rahmen des Schrankes die wenigstens eine Verriegelungsstange mit ihrem freien Ende den Rahmen hintergreift. Mit dem bekannten Stangenverschluß ist der Nachteil verbunden, daß sich die Verriegelungsmöglichkeit auf das Ende der Verriegelungsstange beschränkt. Weiterhin ergibt sich der Nachteil, daß die der Führung der runden Verriegelungsstangen bei deren Längsverschiebung dienenden Stangenführungen bei der Montage des Stangenverschlusses zunächst auf einen an der Tür befestigten Schweißbolzen geschraubt und alsdann die Verriegelungsstange in die Stangenführung eingefädelt werden muß.

Der hinsichtlich der Verriegelung von Rundstangen beschriebene Nachteil hat zu dem Einsatz von Flachbandstangen als Verriegelungsstangen geführt, wie beispielsweise in EP 0 261 268 B1 beschrieben, wobei an der Flachbandstange gesonderte Verriegelungsmittel angebracht sind, denen am Rahmen des Schrankes befestigte Verschlußhalter derart zugeordnet sind, daß in der Schließstellung der Verriegelungsstange die von ihr getragenen Verriegelungsmittel in den Verschlußhalter eingefahren und in dieser Stellung in dem Verschlußhalter festgehalten sind, so daß auch über den Verlauf der Verriegelungsstange verteilt zusätzliche Verriegelungspunkte eingerichtet werden können. Dabei ist es aus der EP 0 630 439 B1 zusätzlich bekannt, an der Flachbandstange durch deren Verformung einen Verriegelungsabschnitt auszubilden, der von an dem Verschlußhalter entsprechend angeordneten Haken in der Verriegelungsstellung der Verriegelungsstange übergriffen wird.

Der Erfindung liegt die Aufgabe zugrunde, bei einem Stangenverschluß mit einer einen runden Querschnitt aufweisenden Verriegelungsstange ohne eine Änderung des Querschnittes im Bereich der Stangenführung die Einrichtung zusätzlicher Verriegelungspunkte über den Verlauf der Verriegelungsstange zu ermöglichen.

Die Lösung dieser Aufgabe ergibt sich einschließlich vorteilhafter Ausgestaltungen und Weiterbildungen aus dem Inhalt der Schutzansprüche, welche dieser Beschreibung nachgestellt sind.

Die Erfindung sieht in ihrem Grundgedanken vor, daß der runde Querschnitt der Verriegelungsstange in wenigstens einem Bereich durch Quetschung der Verriegelungsstange in einen flachen Querschnitt überführt und ein an dem Rahmen des Schrankes anbringbarer U-förmiger Verschlußhalter zur verriegelnden Aufnahme des runden Querschnitts oder des flachen Querschnitts der Verriegelungsstange vorgesehen ist und daß die U-förmige Stangenführung eine die Verriegelungsstange über einen ersten Teilumfang umschließende Aufnahmeöffnung mit einem der Rundung der Verriegelungsstange angepaßten Radius und zwischen ihren U-Schenkeln einen dem Durchmesser der Verriegelungsstange angepaßten Einführbereich aufweist, wobei der Einführbereich seitlich durch wenigstens eine an wenigstens einem U-Schenkel der Stangenführung ausgebildete und den Einführbereich auf ein geringeres Maß als der Stangendurchmesser verengende Federzunge begrenzt ist, die beim Einschieben der Verriegelungsstange nach außen wegdrängbar ist und bei in der Aufnahmeöffnung geführte Verriegelungsstange am Umfang der Verriegelungsstange anliegt und die Verriegelungsstange gegen die Wandung der Aufnahmeöffnung führend festlegt. Mit der Erfindung ist der Vorteil verbunden, daß auch bei einer einen runden Querschnitt aufweisenden Verriegelungsstange in einfacher Weise ein oder mehrere Verriegelungsabschnitte ausgebildet werden können, denen dann an sich bekannte, am Rahmen des Schrankes anzubringende Verschlußhalter zugeordnet sind. In vorteilhafter Weise ist die Anbringung der Verriegelungsabschnitte unabhängig von der Anbringung der Stangenführungen, die weiterhin auf den runden Querschnitt der Verriegelungsstange abgestellt sind. Die Stangenführung ist in vorteilhafter Weise dabei so ausgebildet, daß zur Montage des Stangenverschlusses die Verriegelungsstange mit ihrem runden Querschnitt lediglich in den Aufnahmebereich der gegebenenfalls bereits an dem Türblatt befestigten Stangenführung eingedrückt zu werden braucht.

Nach einem Ausführungsbeispiel der Erfindung wird der einen flachen Querschnitt aufweisende Bereich der Verriegelungsstange durch eine beidseitige Quetschung des runden Querschnitts der Verriegelungsstange ausgebildet.

Nach einem ersten Ausführungsbeispiel der Erfindung ist vorgesehen, daß der einen flachen Querschnitt aufweisende Bereich der runden Verriegelungsstange bei deren Längsverschiebung als Verriegelungsabschnitt in den Verschlußhalter einfahrbar ist und der Verschlußhalter an den freien Enden seiner U-Schenkel den flachen Querschnitt der Verriegelungsstange übergreifende Haken und an seiner Anlagefläche für die Verriegelungsstange eine gerundete Nut zur Führung des runden Querschnitts der Verriegelungsstange aufweist.

In einer alternativen Ausführung des Verschlußhalters kann vorgesehen sein, daß der einen flachen Querschnitt aufweisende Bereich der runden Verriegelungsstange in der Öffnungsstellung des Stangenverschlusses seitlich in den Verschlußhalter einfahrbar ist und bei der Längsverschiebung der Verriegelungsstange deren runder Querschnitt als Verriegelungsabschnitt in den Verschlußhalter einfahrbar ist, welcher mit den Innenseiten seiner die Verriegelungsstange zwischen sich aufnehmenden U-Schenkel die Verriegelungsstange über den überwiegenden Teil von deren Umfang einschließt. Dabei kann vorgesehen sein, daß der Verschlußhalter in Einschubrichtung des den flachen Querschnitt aufweisenden Bereichs der Verriegelungsstange eine schlitzartige Vertiefung zur Aufnahme des über den runden Querschnitt der Verriegelungsstange vorstehenden Abschnitts des flachen Querschnitts aufweist.

Hinsichtlich der Ausbildung der Stangenführung ist es nach einem Ausführungsbeispiel der Erfindung zweckmäßig, wenn beiderseits des Einführbereiches symmetrisch Federzungen an den U-Schenkeln der Stangenführung angeordnet sind. Dabei hat es sich herausgestellt, daß die seitlich des Einführbereiches angeordneten, auswärts federnden Federzungen eine ausreichende Rückhaltung und Fixierung für die in der Aufnahmeöffnung liegende Verriegelungsstange darstellen, die nach dem Einschieben der Verriegelungsstange in die Aufnahmeöffnung ein Herausziehen mit der erforderlichen Sicherheit verhindern. Mit der Erfindung ist demnach der Vorteil verbunden, daß zur Montage des Stangenverschlusses die Verriegelungsstange lediglich in den Aufnahmebereich der gegebenenfalls bereits an dem Türblatt befestigten Stangenführung eingedrückt zu werden braucht.

Nach einem Ausführungsbeispiel der Erfindung ist vorgesehen, daß die Federzungen durch in den U-Schenkeln der Stangenführung angeordnete Hinterschnitte ausgebildet sind. Dabei kann vorgesehen sein, daß die Federzungen mit ihren einwärts zur Aufnahmeöffnung ragenden Stirnseiten bei eingeschobener Verriegelungsstange an dieser anliegen, wobei zweckmäßig die Stirnseite der Federzungen auf dem Radius der Wandung der Aufnahmeöffnung liegen.

In einer Ausführungsform der Erfindung kann vorgesehen sein, daß die Wandung der Aufnahmeöffnung die Verriegelungsstange über einen größer als 180 Grad bemessenen Bereich umschließt und den zum Einführbereich gerichteten Enden der Wandung der Aufnahmeöffnung jeweils ein Hinterschnitt zugeordnet ist; aufgrund der größeren Umfassung der Verriegelungsstange durch die Wandung der Aufnahmeöffnung wird die Führung der Verriegelungsstange verbessert, wobei die Enden der Wandung der Aufnahmeöffnung aufgrund der angeordneten Hinterschnitte ein federndes Aufschnappen beim Eindrücken der Verriegelungsstange in die Aufnahmeöffnung ermöglichen.

In der Zeichnung sind Ausführungsbeispiele der Erfindung wiedergegeben, welche nachstehend beschrieben sind. Es zeigen:
- Fig. 1: eine runde Verriegelungsstange mit einen flachen Querschnitt aufweisenden Bereichen,
- Fig. 2: einen zugehörigen Verschlußhalter in einer Draufsicht,
- Fig. 3: den Verschlußhalter gemäß Figur 2 in einer Gesamtansicht,
- Fig. 4: eine andere Ausführungsform des Verschlußhalters mit gemäß Figur 1 ausgebildeter Verriegelungsstange in einer Draufsicht,
- Fig. 5: eine für eine Rundstange vorgesehene Stangenführung einer geschnittenen Draufsicht,
- Fig. 6: die Stangenführung gemäß Figur 5 in einer geschnittenen Seitenansicht.

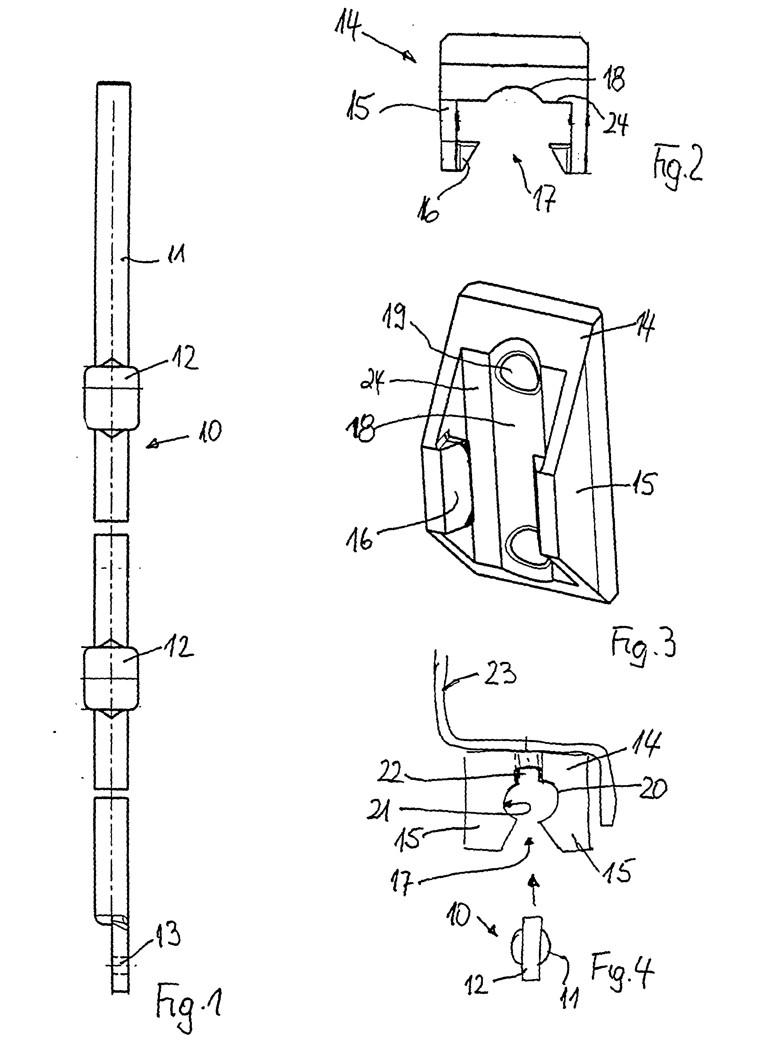

Aus Figur 1 ergibt sich zunächst eine Verriegelungsstange 10, die über ihre Länge in einer ersten Fertigungsstufe einen runden Querschnitt 11 aufweist. An den gewünschten Verriegelungspunkten weist die Verriegelungsstange 10 jeweils einen einen flachen Querschnitt 12 auweisenden Bereich auf, wobei der flache Querschnitt 12 der Verriegelungsstange 10 durch eine von beiden Seiten her vorgenommene Quetschung der runden Verriegelungsstange 10 ausgebildet ist. An ihrem unteren Ende ist eine Anschlußgestaltung 13 zum Anschluß der Verriegelungsstange 10 an den nicht weiter dargestellten Antrieb des Stangenverschlusses für die Längsverschiebung der Verriegelungsstange 10 ausgebildet.

Das in Figur 2 dargestellte Ausführungsbeispiel eines zugehörigen Verschlußhalters 14 läßt die U-förmige Gestalt des Verschlußhalters 14 erkennen, dessen abragende U-Schenkel an ihren freien Enden jeweils einen einwärts gerichteten und zwischen sich einen Einführschlitz 17 ausbildenden Haken 16 aufweist. Die zwischen den U-Schenkeln 15 gebildete Anlagefläche 24 des Verschlußhalters 14 weist eine in Längsrichtung des Verschlußhalters 14 und damit der zugeordneten Verriegelungsstange 10 verlaufende Nut 18 zu führenden Aufnahme des runden Querschnitts 11 der Verriegelungsstange 10 auf, wobei vom Tiefsten der Nut 18 Schraublöcher 19 ihren Ausgang nehmen, in denen entsprechende Befestigungsmittel zur Befestigung des Verschlußhalters 14 am Rahmen eines Schrankes eingreifen können.

Aus der Zusammenschau der Figuren 1 bis 3 ergibt sich die Funktion des Stangenverschlusses; dabei ist die Breite des zwischen den Haken 16 des Verschlußhalters 14 ausgebildeten Einführschlitzes 17 etwas größer bemessen als der Durchmesser des runden Querschnitts 11 der Verriegelungsstange 10, so daß bei der Schließbewegung der Tür oder Klappe gegen den Rahmen die an der Tür oder Klappe geführte Verriegelungsstange 10 mit ihrem runden Querschnitt 11 durch den Einführschlitz 17 des Verschlußhalters 14 in den Verschlußhalter eintritt. Wird durch Betätigung der im Rahmen des Stangenverschlusses vorgesehenen Betätigung eine Längsverschiebung der Verriegelungsstange 10 herbeigeführt, so tritt der flache Querschnitt 12 der Verriegelungsstange 10 in den Verschlußhalter 14 ein und wird hier von den Haken 16 der U-Schenkel 15 übergriffen und festgehalten, so daß in der dadurch vermittelten Verriegelungsstellung die Verriegelungsstange 10 nicht aus dem Verschlußhalter 14 heraustreten kann. Damit ist eine Verriegelung der Verriegelungsstange 10 in den Verschlußhalter 14 und damit der Tür gegenüber dem Rahmen verwirklicht. Bei der Längsverschiebung der Verriegelungsstange 10 in dem Verschlußhalter 14 erfolgt eine Führung des runden Querschnitts 11 der Verriegelungsstange 10 in der einen entsprechenden Radius aufweisenden Nut 18 in der Anlagefläche 24 des Verschlußhalters 14.

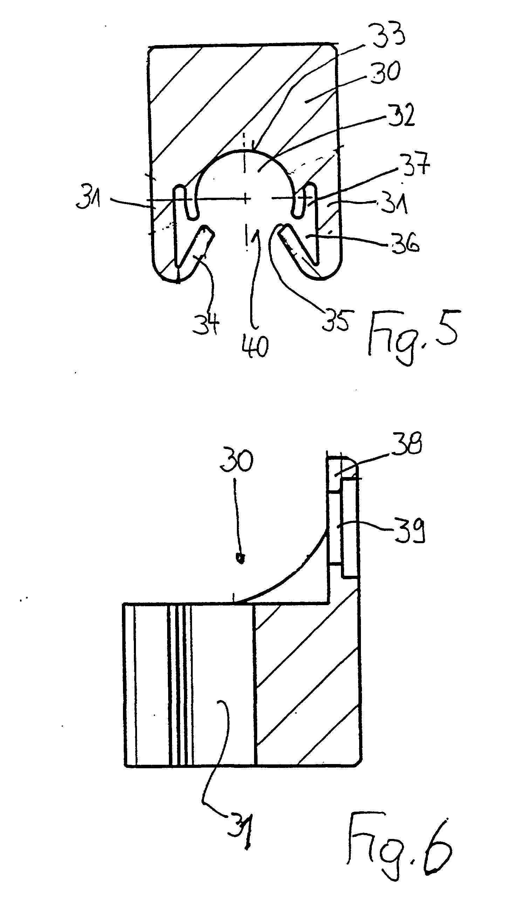

Aus Figur 4 ist eine alternative Zuordnung von Verriegelungsstange 10 und Verschlußhalter 14 ersichtlich, bei welcher nun der einen flachen Querschnitt 12 aufweisende Bereich der Verriegelungsstange 10 in der Öffnungsstellung des Stangenverschlusses in den Verschlußhalter 14 einführbar ist, während der runde Querschnitt 11 der Verriegelungsstange 10 bei diesem Ausführungsbeispiel als Verriegelungsabschnitt wirkt. Hierzu ist der zwischen den U-Schenkeln 15 des Verschlußhalters 14 befindliche Einführschlitz 17 schmaler bemessen, so daß beim Schließen des Schrankes die Verriegelungsstange 10 mit ihrem senkrecht zum Verschlußhalter 14 ausgerichteten flachen Querschnitt 12 zwischen die U-Schenkel 15 des Verschlußhalters 14 eintreten kann. Der an einem Rahmen 23 befestigte Verschlußhalter 14 ist an den Innenseiten 20 seiner U-Schenkel 15 mit entsprechenden Rundungen 21 versehen, die dem Radius des runden Querschnitts 11 der Verriegelungsstange 10 angepaßt sind, so daß der Verschlußhalter 14 mit seinen U-Schenkeln 15 den runden Querschnitt 11 der Verriegelungsstange 10 über den überwiegenden Teil von deren Umfang umschließt, wobei die U-Schenkel 15 des Verschlußhalters 14 die Verriegelungsstange 10 so weit umgreifen, daß der in dem Verschlußhalter 14 eingefahrene runde Querschnitt 11 der Verriegelungsstange 10 nicht durch den Einführschlitz 17 des Verschlußhalters 14 heraustreten kann. Damit ist auch bei diesem Ausführungsbeispiel eine sichere Verriegelung des Stangenverschlusses gegeben. Aufgrund der senkrechten Ausrichtung des flachen Querschnitts 12 der Verriegelungsstange 10 zum Verschlußhalter 14 weist der Verschlußhalter 14 eine schlitzartige Vertiefung 22 zur Aufnahme des über den runden Querschnitt 11 überstehenden Abschnitts des flachen Querschnitts 12 der Verriegelungsstange 10 auf.

Die in den Figuren 5 und 6 dargestellte Stangenführung 30 hat einen im wesentlichen U-förmigen Querschnitt mit seitlich von dem Türblatt als Träger der Stangenführung abragenden U-Schenkeln 31, die zwischen sich eine Aufnahmeöffnung 32 für die nicht dargestellte Verriegelungsstange mit rundem Querschnitt ausbilden, wobei die Wandung 33 der Aufnahmeöffnung 32 einen dem Durchmesser der Verriegelungsstange angepaßten Radius aufweist. Die Stangenführung 30 weist ferner einen Einführbereich 40 auf, über welchen die nicht dargestellte runde Verriegelungsstange in die Aufnahmeöffnung 32 der Stangenführung 30 eingedrückt werden kann.

Beiderseits des Einführbereichs 40 weisen die U-Schenkel 31 einwärts gerichtete und den Einführbereich 40 auf ein geringeres Maß als den Durchmesser der Verriegelungsstange verengende Federzungen 34 auf, die durch Anordnung eines entsprechenden Hinterschnitts 36 in den U-Schenkeln 31 hergestellt sind, wobei die Federzungen 34 mit ihrer zur Aufnahmeöffnung 32 gerichteten Stirnseite 35 bei eingeschobener Verriegelungsstange an deren Umfang anliegen und diese gegen die Wandung 33 der Aufnahmeöffnung 32 drücken. Ist die Verriegelungsstange in die Aufnahmeöffnung 32 eingedrückt, so verhindern die Federzungen 34 mit ausreichender Sicherheit ein Herausziehen der Verriegelungsstange aus der Aufnahmeöffnung 32.

Bei dem dargestellten Ausführungsbeispiel umgreift die Wandung 33 der Aufnahmeöffnung 32 die eingeschobene Verriegelungsstange 10 über einen größer als 180 Grad bemessenen Umfangsbereich, wobei die zum Einführbereich 40 gerichteten Enden der Wandung 33 der Aufnahmeöffnung 32 mit einem weiteren Hinterschnitt 37 versehen sind, so daß die Enden beim Einschieben der Verriegelungsstange ebenfalls federnd nach außen weggedrängt werden und sich bei eingeschobener Verriegelungsstange auf den Umfang derselben legen und dadurch die Führung der Verriegelungsstange verbessern.

Zur Befestigung ist die Stangenführung 30 mit einem in Längsrichtung der Verriegelungsstange angeordneten Ansatz 38 versehen, in welchem eine Befestigungsbohrung 39 ausgebildet ist, so daß die Stangenführung 30 durch Anbringung eines geeigneten Befestigungsmittels an einer nicht dargestellten Tür oder Klappe befestigbar ist.

## Patentansprüche

1. Stangenverschluß zum Verriegeln von vorzugsweise Schaltschranktüren oder ähnlichen Türen oder Klappen mit einer auf der Außenseite des Türblattes oder der Klappe befestigbaren Grundplatte oder Schlüsselschild und mit einer Betätigung zum Antrieb der wenigstens einen im montierten Zustand längsverschieblich an dem Türblatt oder Klappe in wenigstens einer Stangenführung (30) geführten, einen runden Querschnitt aufweisenden Verriegelungsstange (10), **dadurch gekennzeichnet, daß** der runde Querschnitt (11) der Verriegelungsstange (10) in wenigstens einem Bereich durch Quetschung der Verriegelungsstange (10) in einen flachen Querschnitt (12) überführt und ein an dem Rahmen (23) des Schrankes anbringbarer U-förmiger Verschlußhalter (14) zur verriegelnden Aufnahme des runden Querschnitts oder des flachen Querschnitts, der Verriegelungsstange (10) vorgesehen ist und daß die U-förmige Stangenführung (30) eine die Verriegelungsstange (10) über einen ersten Teilumfang umschließende Aufnahmeöffnung (32) mit einem der Rundung der Verriegelungsstange (10) angepaßten Radius und zwischen ihren U-Schenkeln (31) einen dem Durchmesser der Verriegelungsstange angepaßten Einführbereich (40) aufweist, wobei der Einführbereich (40) seitlich durch wenigstens eine an wenigstens einem U-Schenkel (31) der Stangenführung (30) ausgebildete und den Einführbereich (40) auf ein geringeres Maß als der Stangendurchmesser verengende Federzunge (34) begrenzt ist, die beim Einschieben der Verriegelungsstange (10) nach außen wegdrängbar ist und bei in der Aufnahmeöffnung (32) geführte Verriegelungsstange (10) am Umfang der Verriegelungsstange anliegt und die Verriegelungsstange (10) gegen die Wandung (33) der Aufnahmeöffnung (32) führend festlegt.

2. Stangenverschluß nach Anspruch 1, **dadurch gekennzeichnet, daß** der flache Querschnitt (12) der Verriegelungsstange (10) durch eine beidseitige Quetschung des runden Querschnitts (11) der Verriegelungsstange (10) gebildet ist.

3. Stangenverschluß nach Anspruch 1 oder 2, **dadurch gekennzeichnet, daß** der einen flachen Querschnitt (12) aufweisende Bereich der runden Verriegelungsstange (10) bei deren Längsverschiebung als Verriegelungsabschnitt in den Verschlußhalter (14) einfahrbar ist und der Verschlußhalter (14) an den freien Enden seiner U-Schenkel (15) den flachen Querschnitt (12) der Verriegelungsstange (10) übergreifende Haken (16) und an seiner Anlagefläche (24) für die Verriegelungsstange (10) eine gerundete Nut (18) zur Führung des runden Querschnitts (11) der Verriegelungsstange (10) aufweist.

4. Stangenverschluß nach Anspruch 1 oder 2, **dadurch gekennzeichnet, daß** der einen flachen Querschnitt (12) aufweisende Bereich der runden Verriegelungsstange (10) in der Öffnungsstellung des Stangenverschlusses seitlich in den Verschlußhalter (14) einfahrbar ist und bei der Längsverschiebung der Verriegelungsstange (10) deren runder Querschnitt (11) als Verriegelungsabschnitt in den Verschlußhalter (14) einfahrbar ist, welcher mit den Innenseiten seiner die Verriegelungsstange (10) zwischen sich aufnehmenden U-Schenkel (15) die Verriegelungsstange (10) über den überwiegenden Teil von deren Umfang einschließt.

5. Stangenverschluß nach Anspruch 4, **dadurch gekennzeichnet, daß** der Verschlußhalter (14) in Einschubrichtung des den flachen Querschnitt (12) aufweisenden Bereichs der Verriegelungsstange (10) eine schlitzartige Vertiefung (22) zur Aufnahme des über den runden Querschnitt (11) der Verriegelungsstange (10) vorstehenden Abschnitts des flachen Querschnitts (12) aufweist.

6. Stangenverschluß nach einem der Ansprüche 1 bis 5, **dadurch gekennzeichnet, daß** an den beiden U-Schenkeln (31) der Stangenführung (30) symmetrisch Federzungen (34) angeordnet sind.

7. Stangenverschluß nach Anspruch 6, **dadurch gekennzeichnet, daß** die Federzungen (34) durch in den U-Schenkeln (31) der Stangenführung (30) angeordnete Hinterschnitte (36) ausgebildet sind.

8. Stangenverschluß nach Anspruch 6 oder 7, **dadurch gekennzeichnet, daß** die Federzungen (34) mit ihren einwärts zur Aufnahmeöffnung (32) ragenden Stirnseiten (35) bei eingeschobener Verriegelungsstange (10) an dieser anliegen.

9. Stangenverschluß nach Anspruch 8, **dadurch gekennzeichnet, daß** die Stirnseite (35) der Federzungen (34) auf dem Radius der Wandung (33) der Aufnahmeöffnung (32) liegen.

10. Stangenverschluß nach einem der Ansprüche 6 bis 9, **dadurch gekennzeichnet, daß** die Wandung (33) der Aufnahmeöffnung (32) die Verriegelungsstange (10) über einen größer als 180 Grad bemessenen Bereich umschließt und den zum Einführbereich (40) gerichteten Enden der Wandung (33) der Aufnahmeöffnung (32) jeweils ein Hinterschnitt (37) zugeordnet ist.

## Claims

1. Bar-type fastening device for latching, preferably, switch cabinet doors or similar doors or flaps, with a base plate or key plate which can be fastened on the outside of the door leaf or flap and with an actuating system for driving the at least one latching bar (10) which is guided so as to be longitudinally displaceable, when in the mounted condition, on the door leaf or flap in at least one bar-guide (30) and has a round cross-section, **characterised in that** the round cross-section (11) of the latching bar (10) is converted into a flat cross-section (12) in at least one region by squashing the latching bar (10) and a U-shaped fastening-device-holder (14), which can be fitted to the frame (23) of the cabinet, is provided for receiving the round cross-section or the flat cross-section of the latching bar (10) in a latching manner, and that the U-shaped bar-guide (30) has a receiving aperture (32) enclosing the latching bar (10) over a first, partial periphery and having a radius adapted to the rounded portion of the latching bar (10), and also has, between the legs (31) of its U, an introducing region (40) adapted to the diameter of the latching bar, the introducing region (40) being delimited laterally by at least one spring tongue (34) which is constructed on at least one leg (31) of the U of the bar-guide (30) and narrows the introducing region (40) to a smaller size than the diameter of the bar, and which can be forced away outwards on insertion of the latching bar (10) and rests against the periphery of the latching bar when the latter is guided in the receiving aperture (32), and which secures the latching bar (10) in position against the wall (33) of the receiving aperture (32) in a guiding manner.

2. Bar-type fastening device according to claim 1, **characterised in that** the flat cross-section (12) of the latching bar (10) is formed by squashing the round cross-section (11) of the latching bar (10) on both sides.

3. Bar-type fastening device according to claim 1 or 2, **characterised in that** that region of the round latching bar (10) which has a flat cross-section (12) is capable of being retracted into the fastening-device-holder (14) as a latching section when longitudinal displacement of said latching bar occurs, and the fastening-device-holder (14) has, at the free ends of the legs (15) of its U, hooks (16) that engage over the flat cross-section (12) of the latching bar (10) and, at its bearing surface (24) for the latching bar (10), a rounded groove (18) for guiding the round cross-section (11) of the latter.

4. Bar-type fastening device according to claim 1 or 2, **characterised in that** that region of the round latching bar (10) which has a flat cross-section (12) is capable of being retracted laterally into the fastening-device-holder (14) when the bar-type fastening device is in the opening position and, when longitudinal displacement of the latching bar (10) occurs, its round cross-section (11) is capable of being retracted, as a latching section, into the fastening-device-holder (14) which encloses, with the inner sides of the legs (15) of its U which receive the latching bar (10) between them, the latching bar (10) over the predominant part of its periphery.

5. Bar-type fastening device according to claim 4, **characterised in that** the fastening-device-holder (14) has, in the direction of insertion of that region of the latching bar (10) which has the flat cross- section (12), a slot-like depression (22) for receiving that section of the flat cross-section (12) which projects above the round cross-section (11) of the latching bar (10).

6. Bar-type fastening device according to one of claims 1 to 5, **characterised in that** spring tongues (34) are disposed symmetrically on the two legs (31) of the U of the bar-guide (30).

7. Bar-type fastening device according to claim 6, **characterised in that** the spring tongues (34) are constructed by means of undercuts (36) disposed in the legs (31) of the U of the bar-guide (30).

8. Bar-type fastening device according to claim 6 or 7, **characterised in that** the spring tongues (34) bear, with their front ends (35) which protrude inwards towards the receiving aperture (32), against the latching bar (10) when the latter is inserted.

9. Bar-type fastening device according to claim 8, **characterised in that** the front ends (35) of the spring tongues (34) lie on the radius of the wall (33) of the receiving aperture (32).

10. Bar-type fastening device according to one of claims 6 to 9, **characterised in that** the wall (33) of the receiving aperture (32) encloses the latching bar (10) over a region of the periphery which is greater than 180 degrees in size, and an undercut (37) is associated with each of those ends of the wall (33) of the receiving aperture (32) which are directed towards the introducing region (40).

## Revendications

1. Crémone à tige longue, pour verrouiller de préférence des portes d'armoires ou des portes ou battants similaires, présentant une plaque de base ou écusson de serrure pouvant être fixé sur le côté extérieur du vantail de porte ou du battant et présentant une commande pour entraîner au moins une tige de crémone (10) présentant une section ronde, guidée à l'état monté dans au moins un guide de tige (30) par coulissement longitudinal sur le vantail de porte ou battant, **caractérisée en ce que**, par écrasement de la tige de crémone (10) dans au moins une zone, la section transversale ronde (11) de la tige de crémone (10) laisse la place à une section transversale plate (12) et **en ce qu'**un sabot de crémone (14) en forme de U pouvant être monté sur le bâti (23) de l'armoire est prévu pour loger aux fins de verrouillage la section transversale ronde ou la section transversale plate de la tige de crémone (10), et **en ce que** le guide de tige (30) en forme de U présente une ouverture formant logement (32) entourant la tige de crémone (10) sur un premier périmètre partiel, avec un rayon adapté à la courbure de la tige de crémone (10) et, entre ses bras (31) du U, une zone d'introduction (40) adaptée au diamètre de la tige de crémone, la zone d'introduction (40) étant limitée latéralement par au moins une patte élastique (34), formée sur au moins un bras (31) du U du guide de tige (30) et rétrécissant la zone d'introduction (40) à une dimension plus étroite que le diamètre de tige, qui peut être poussée vers l'extérieur lors de l'introduction de la tige de crémone (10) et, la tige de crémone (10) étant guidée dans l'ouverture formant logement (32), repose contre le pourtour de la tige de crémone (10) et presse la tige de crémone (10) contre la paroi (33) de l'ouverture formant logement (32) en la guidant.

2. Crémone à tige longue selon la revendication 1, **caractérisée en ce que** la section transversale plate (12) de la tige de crémone (10) est formée par un écrasement bilatéral de la section transversale ronde (11) de la tige de crémone (10).

3. Crémone à tige longue selon la revendication 1 ou 2, **caractérisée en ce que** la zone présentant une section transversale plate (12) de la tige de crémone (10) ronde peut être insérée, lors du coulissement longitudinal de celle-ci, comme section de verrouillage dans le sabot de crémone (14), et **en ce que** le sabot de crémone (14) présente, à ses extrémités libres de ses bras (15) du U des crochets (16) entourant la section transversale plate (12) de la tige de crémone (10), et à sa surface d'appui (24) pour la tige de crémone (10) une rainure arrondie (18) pour guider la section transversale ronde (11) de la tige de crémone (10).

4. Crémone à tige longue selon la revendication 1 ou 2, **caractérisée en ce que**, lorsque la crémone à tige longue est en position ouverte, la zone de la tige de crémone (10) ronde présentant une section transversale plate (12) peut être introduite dans le sabot de crémone (14) et, lors du coulissement longitudinal de la crémone à tige longue (10), la section transversale ronde (11) de celle-ci peut être introduite comme section de verrouillage dans le sabot de crémone (14), lequel par les côtés extérieurs de ses bras (15) du U logeant entre eux la tige de crémone (10), entoure la tige de crémone (10) sur la majeure partie de son périmètre.

5. Crémone à tige longue selon la revendication 4, **caractérisée en ce que** dans la direction d'introduction de la zone de la tige de crémone (10) comportant la section transversale plate (12), le sabot de crémone (14) présente un creux (22) en forme de fente pour loger la partie de la section transversale plate (12) qui dépasse de la section transversale ronde (11) de la tige de crémone (10).

6. Crémone à tige longue selon l'une des revendications 1 à 5, **caractérisée en ce que** des pattes élastiques (34) sont disposées symétriquement sur les deux bras (31 ) du U du guide de tige (30).

7. Crémone à tige longue selon la revendication 6, **caractérisée en ce que** les pattes élastiques (34) sont formées par l'intermédiaire de découpes (36) ménagées dans les bras (31) du U du guide de tige (30).

8. Crémone à tige longue selon la revendication 6 ou 7, **caractérisée en ce que**, par leurs faces frontales (35) s'avançant à l'intérieur vers l'ouverture formant logement (32), les pattes élastiques (34) reposent sur la tige de crémone (10) lorsque celle-ci est insérée.

9. Crémone à tige longue selon la revendication 8, **caractérisée en ce que** les faces frontales (35) des pattes élastiques (34) sont adjacentes à la courbure de la paroi (33) de l'ouverture formant logement (32).

10. Crémone à tige longue selon l'une des revendications 6 à 9, **caractérisée en ce que** la paroi (33) de l'ouverture formant logement (32) entoure la tige de crémone (10) sur une zone dimensionnée de plus de 180,° et **en ce qu'**aux extrémités de la paroi (33) de l'ouverture formant logement (32) orientées vers la zone d'introduction (40) est associée respectivement une découpe (37).
